# EUROPÄISCHE PATENTSCHRIFT

(11) **EP 1 860 674 B1**
(45) Veröffentlichungstag und Bekanntmachung des Hinweises auf die Patenterteilung: **20.03.2013**
(21) Anmeldenummer: 07006214.6
(22) Anmeldetag: 27.03.2007
(51) Int. Cl.: H01H 3/16, F16P 3/08, H01H 27/00

(54) **Vorrichtung zum Überwachen des Zustandes einer Schutzeinrichtung einer Maschine**
Device for monitoring the status of a protection device of a machine
Dispositif de surveillance de l'état d'un dispositif de protection d'une machine

(30) Priorität: 24.05.2006 DE 102006025606
(43) Veröffentlichungstag der Anmeldung: 28.11.2007
(73) Patentinhaber: EUCHNER GmbH + Co. KG, 70771 Leinfelden-Echterdingen (DE)
(72) Erfinder: König, Tobias, 71034 Böblingen (DE); Heigele, Jochen, 70771 Leinfenden-Echterdingen (DE); Bächle, Erik, 70794 Filderstadt (DE)
(74) Vertreter: Bartels & Partner

(56) Entgegenhaltungen:
- EP-A- 0 078 969
- JP-A- 2002 216 591
- US-A- 2 157 043

## Beschreibung

Die Erfindung betrifft eine Vorrichtung zum Überwachen des Zustandes einer Schutzeinrichtung einer Maschine, insbesondere einen Sicherheitsschalter zum Überwachen des geschlossenen Zustandes einer Schutztür oder dergleichen.

Aus der DE 43 28 297 C1 ist ein Sicherheitsschalter bekannt, in dessen Schalterkopf ein beispielsweise an einer Schutztür einer Schutzeinrichtung festgelegter Betätiger eintreten kann und dabei ein Schaltrad dreht. Innerhalb des Schaltergehäuses ist ein Schaltstößel in Anlage an der Umfangsfläche des Schaltrades gehalten. Bei einem vorgebbarem Drehwinkel, welcher der geschlossenen Position der Schutztür entspricht, rastet der Schaltstößel in eine hierfür auf der Umfangsfläche des Schaltrades vorgesehene Rastvertiefung ein und schließt dadurch ein Kontaktpaar. Auf diese Weise ist der eingeführte Zustand des Betätigers und mithin die geschlossene Position der Schutztür elektrisch signalisierbar.

Bei Anwendungen, in denen die Schutzeinrichtung zwei oder mehr bewegliche Teile aufweist, beispielsweise zwei Schiebetüren, ist es erforderlich, zwei gattungsgemäße Sicherheitsschalter einzusetzen.

Damit verbunden ist nicht nur ein erhöhter Investitionsaufwand, sondern auch ein zusätzlicher Verdrahtungsaufwand, weil beide Sicherheitsschalter mit einer neben- oder übergeordneten Steuereinheit verbunden werden müssen.

Aus der US-A-2 157 043 ist eine Vorrichtung mit einem Schaltelement bekannt, mit dem der geschlossene Zustand von zwei Türen signalisiert werden kann. Dabei ist an einer ersten Tür ein doppelarmiger Hebel schwenkbar gelagert. Ein erster Hebelarm des doppelarmigen Hebels kann nur im geschlossenen Zustand der ersten Tür durch Schwenken des doppelarmigen Hebels das Schaltelement betätigen. Zum Schwenken des doppelarmigen Hebels wirkt in dem geschlossenen Zustand der ersten und zweiten Tür ein an der zweiten Tür festgelegter Mitnehmer auf den zweiten Hebelarm. Die JP 2002 216591 offenbart eine Vorrichtung gemäβ dem Oberbegriff des Anspruchs 1.

Der Erfindung liegt die Aufgabe zugrunde, eine gattungsgemäße Vorrichtung bereitzustellen, welche die Nachteile des Standes der Technik überwindet. Insbesondere soll eine Vorrichtung bereitgestellt werden, die mit einem reduzierten schaltungstechnischen und apparativen Aufwand die gleiche Sicherheitsstufe erreicht und dabei kostengünstiger in der Herstellung und der Montage ist.

Diese Aufgabe ist durch die im Anspruch 1 bestimmte Vorrichtung gelöst. Besondere Ausführungsarten der Erfindung sind in den Unteransprüchen bestimmt.

Erfindungsgemäß ist die Aufgabe gelöst durch die Verwendung einer Vorrichtung, die zwei oder mehrere Schalterköpfe aufweist, die mit jeweils einem Betätiger zusammenwirken können. In einer Ausführungsart ist jeder der Betätiger einem Teil der Schutzeinrichtung zugeordnet, beispielsweise an einem beweglichen Teil der Schutzeinrichtung angeordnet. Durch die logische UND-Verknüpfung ist der Schalter nur dann betätigbar und wird in einer Ausführungsart nur dann betätigt, wenn alle von der Vorrichtung überwachten beweglichen Teile der Schutzeinrichtung in ihrer geschlossenen Position sind und damit die Schutzeinrichtung in ihrem sicheren Zustand. In einer Ausführungsart ist die logische UND-Verknüpfung mechanisch durch die Schalterbetätigungseinrichtung realisiert, insbesondere durch ein Koppelelement. In einer Ausführungsart ist das Koppelelement in der Vorrichtung beweglich gelagert und dabei insbesondere mit dem Schaltelement bewegungsgekoppelt. In einer Ausführungsart wandelt das Koppelelement eine Linearbewegung des Schaltelements, insbesondere des Schalterbetätigungsstößels, in jeweils eine Linearbewegung eines Betätigungsmittels um, das bis an den Schalterkopf heran oder bis in den Schalterkopf hinein reicht. Vorteilhaft ist dabei, dass nur ein Schalter erforderlich ist und damit nicht nur der Investitionsaufwand sondern auch der Verdrahtungsaufwand bei der Montage der Vorrichtung erheblich reduziert ist.

Das Zusammenwirken des Betätigers mit dem ihm zugeordneten Schalterkopf kann sowohl kontaktbehaftet erfolgen, beispielsweise durch das Einführen des Betätigers in eine dafür vorgesehene Öffnung im Schalterkopf und/oder das Drehen eines Schaltrades durch den Betätiger, oder auch kontaktlos, beispielsweise durch einen kontaktlosen Signalaustausch zwischen dem Betätiger und dem Schalterkopf, etwa durch Anordnung eines Transponders im Betätiger, der von einem im Schalterkopf angeordneten Lesekopf angeregt und mit Energie für seinen Betrieb versorgt wird.

Die Vorrichtung kann als Sicherheitsschalter mit separatem Betätiger ausgebildet sein, wobei der Betätiger beispielsweise an einem beweglichen Teil einer Schutzeinrichtung befestigt ist und das Schaltergehäuse an einem feststehenden Teil der Schutzeinrichtung. Die Vorrichtung kann aber auch als Positionsschalter ausgebildet sein, wobei der Betätiger nicht als separates Element ausgebildet ist, sondern auf den Schalterkopf aufgesetzt ist und beispielsweise durch einen Taststift oder einen Schwenkhebel gebildet ist. In diesem Fall kann die Vorrichtung komplett an einem der Teile der Schutzeinrichtung befestigt sein, beispielsweise an einem feststehenden Teil. Die Betätigung der Vorrichtung erfolgt in diesem Fall beispielsweise durch das Anfahren des beweglichen Teils der Schutzeinrichtung oder eines daran angebrachten Steuernockens an den auf die Vorrichtung aufgesetzten Betätiger.

In einer Ausführungsart ist der Schalterkopf und der weitere Schalterkopf so ausgestaltet, dass ein Zusammenwirken mit dem zugehörigen Betätiger auch aus unterschiedlichen Anfahrrichtungen des Betätigers in Bezug auf den Schalterkopf möglich ist. So kann beispielsweise der Schalterkopf an mehreren Außenseiten eine Einführöffnung für das Einführen des Betätigers aufweisen, oder an mehreren Außenseiten einen Lesekopf für das Zusammenwirken mit dem Betätiger.

In einer Ausführungsart sind die Schalterköpfe lösbar an einer Kopfaufnahmeeinheit festgelegt, die wiederum lösbar an dem eigentlichen Schaltergehäuse festlegbar ist, in dem das Schaltelement angeordnet ist. Die Befestigung kann über separate Befestigungsmittel, insbesondere Schrauben, erfolgen. Alternativ ist auch eine Befestigung der Schalterköpfe durch einen Bajonettverschluss. Grundsätzlich besteht aber auch die Möglichkeit, die Schalterköpfe einstückig mit der Kopfaufnahmeeinheit auszubilden und/oder die Kopfaufnahmeeinheit einstückig mit dem Schaltergehäuse auszubilden. In einer Ausführungsart können die Schalterköpfe in unterschiedlicher Ausrichtung an der Kopfaufnahmeeinheit festlegbar sein und/oder die Kopfaufnahmeeinheit kann in unterschiedlicher Ausrichtung an dem Schaltergehäuse festlegbar sein. Dadurch ist es möglich, entsprechend den Gegebenheiten am Einbauort, die Ausrichtung der Schalterköpfe an die jeweilige Anfahrrichtung der Betätiger anzupassen.

In einer Ausführungsart ist das Schaltelement durch einen gegebenenfalls mehrpoligen kontaktbehafteten elektrischen Schalter gebildet. Dabei kann es sich insbesondere um einen Zwangsöffner handeln, dessen Kontaktbrücken an einem Schalterbetätigungsstößel angeordnet sind und elektrische Verbindungen zwischen fest in dem Schaltergehäuse angeordneten Kontaktpaaren schließen und/oder öffnen. In einer Ausführungsart wird der Schalterbetätigungsstößel nur dann betätigt, insbesondere in seiner Längsrichtung verschoben, wenn sowohl der Betätiger als auch der weitere Betätiger mit dem Schalterkopf bzw. dem weiteren Schalterkopf zusammenwirkt. Das Zusammenwirken nur eines der Betätiger mit dem zugeordneten Schalterkopf bewirkt dagegen keine Verschiebung des Schalterbetätigungsstößels, und demzufolge auch keine Signalisierung durch die Vorrichtung.

In einer Ausführungsart der Erfindung weist jeder Schalterkopf ein drehbar gelagertes Schaltrad auf, an dem ein Betätigungsmittel der Schalterbetätigungseinrichtung in Anlage gehalten ist, das in Wirkverbindung mit dem Schalterbetätigungsstößel ist. Das In-Anlage-Halten kann durch eine beispielsweise federkraftbelastete oder magnetkraftbelastete Vorspannung des Schalterbetätigungsstößels bewirkt werden, wobei für die Übertragung dieser Vorspannung auf das Betätigungsmittel ein Koppelelement vorgesehen sein kann. Das Koppelelement kann als Zwischenelement zwischen dem Schalterbetätigungsstößel und dem Betätigungsmittel angeordnet sein.

Aufgrund einer von der Kreislinie abweichenden Außenkontur des Schaltrades kommt es beim Drehen des Schaltrades zu einer Längsverschiebung des Betätigungsmittels, die über das Koppelelement auf den Schalterbetätigungsstößel übertragbar ist. Bei einer entsprechenden Ausgestaltung des Schaltelements können auf diese Weise zwei oder mehr Drehpositionen des Schaltrades signalisiert werden. Das Schaltrad kann auch eine Rastvertiefung aufweisen in welche das Betätigungsmittel einrastet und dadurch das Schaltrad lösbar arretiert. Auf diese Weise kann der in dem zugehörigen Schalterkopf eingeführte Betätiger arretiert werden und dadurch die Schutzeinrichtung in ihrer zugehörigen Position arretiert werden, beispielsweise zugehalten werden. Diese Arretierung kann federkraftbelastet oder magnetkraftbelastet sein und/oder durch Magnetkraft oder Federkraft lösbar sein.

In einer Ausführungsart sind die an dem jeweils zugeordneten Schaltrad anliegenden Betätigungsmittel parallel zueinander ausgerichtet. Dadurch lässt sich eine kompakte Bauform des Doppel- oder Mehrfachkopfes realisieren. In einer Ausführungsart ist das Koppelelement als Gabelelement ausgebildet, wobei die Zinken der Gabel vorzugsweise parallel zueinander sind. Die Zinken können unmittelbar oder durch ein als Zinkenverlängerung dienendes Betätigungsmittel in Anlage an dem zugeordneten Schaltrad sein. Der Gabelstiel ist mit dem Schalterbetätigungsstößel gekoppelt. Anstelle einer Gabelform kann das Koppelelement auch U-förmig oder W-förmig ausgebildet sein.

In einer Ausführungsart sind die an dem jeweils zugeordneten Schaltrad anliegenden Betätigungsmittel koaxial zueinander ausgerichtet. Dadurch ist auf einfache Weise ein größerer Abstand der mindestens zwei Schalterköpfe zueinander realisierbar, was für einige Anwendungsfälle vorteilhaft ist. Die Ausrichtung der Betätigungsmittel ist vorzugsweise schräg und insbesondere quer zu der Bewegungsrichtung des Schalterbetätigungsstößels. In einer Ausführungsart ist als Koppelelement ein Rampenelement vorgesehen, mit dem die schräg- oder querführende Bewegungskopplung zwischen dem Betätigungsmittel und dem Schalterbetätigungsstößel auf einfache Weise realisierbar ist. Beispielsweise kann das Rampenelement mit dem Schalterbetätigungsstößel bewegungsgekoppelt sein und an seinen Rampenflächen ist jeweils ein Betätigungsmittel in gleitend beweglicher Anlage.

In einer Ausführungsart weist die Vorrichtung eine von außerhalb der Vorrichtung betätigbare Verriegelungs- und/oder Entriegelungseinrichtung auf, mittels welcher ein verriegelter und/oder entriegelter Zustand der Vorrichtung lösbar arretierbar ist. Durch die Möglichkeit der manuellen Verriegelung sind beispielsweise Montage und Justagearbeiten vereinfacht. Durch die Möglichkeit der manuellen Entriegelung ist im Bedarfsfall eine Deblockierung der Vorrichtung herbeiführbar. In einer Ausführungsart weist die Verriegelungs- und/oder Entriegelungseinrichtung ein Betätigungselement auf, das mit der Schalterbetätigungseinrichtung gekoppelt ist, und beispielsweise mit einem speziellen Schlüssel von außerhalb gedreht werden kann; dadurch ist der verriegelte oder entriegelte Zustand gegen unbeabsichtigtes oder unbefugtes Betätigen sicherbar. In einer Ausführungsart erfolgt durch die Kopplung mit der Schalterbetätigungseinrichtung auch eine entsprechende Signalisierung der Vorrichtung durch das Verriegeln oder Entriegeln. In einer Ausführungsart ist das Betätigungselement als Taste ausgebildet, bei deren Drücken eine Verriegelung oder eine Entriegelung erfolgt.

In einer Ausführungsart weist die Vorrichtung eine den Schaltzustand der Vorrichtung anzeigende Anzeigeeinrichtung auf. Dabei kann es sich um eine mit Fremdenergie betriebene Anzeigeeinrichtung handeln, wie beispielsweise eine Leuchtdiode, die durch Aufleuchten den einen oder anderen Zustand der Vorrichtung signalisiert. Möglich ist beispielsweise auch eine zwei- oder mehrfarbige Leuchtdiode, deren Farbe den jeweils zugehörigen Zustand anzeigt. In einer Ausführungsart ist die Anzeigeeinrichtung hilfsenergiefrei und weist beispielsweise ein Sichtfenster auf, über das der Schaltzustand der Vorrichtung abgelesen werden kann. Das Sichtfenster kann im Bereich der Schalterbetätigungseinrichtung angeordnet sein, insbesondere im Bereich des Koppelelements und/oder im Bereich des dem Koppelelement zugewandten Ende des Schalterbetätigungsstößels.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine schematische Draufsicht auf eine Gesamtanordnung mit einer erfindungsgemäßen Vorrichtung,
- Fig. 2: zeigt teilweise in der Draufsicht, teilweise im Schnitt ein erstes Ausführungsbeispiel der Anordnung des Schalterkopfes und des weiteren Schalterkopfes,
- Fig. 3: zeigt eine perspektivische Gesamtansicht des ersten Ausführungsbeispiels der Vorrichtung der Fig. 1, und
- Fig. 4: zeigt eine Seitenansicht eines zweiten Ausführungsbeispiels der Vorrichtung, teilweise in der Ansicht und teilweise im Schnitt.

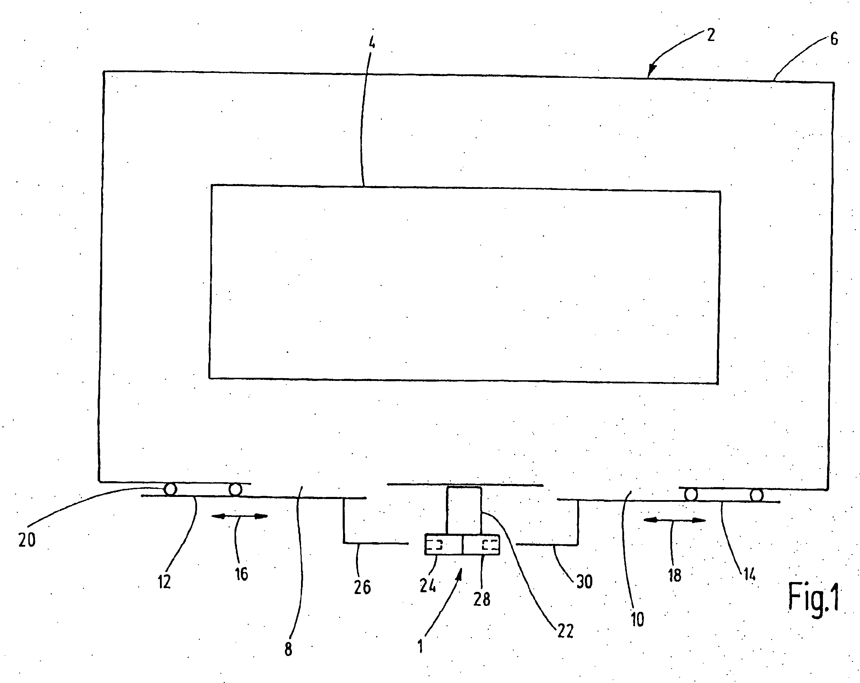

Die Fig. 1 zeigt eine schematische Draufsicht auf eine Gesamtanordnung mit einer erfindungsgemäßen Vorrichtung 1 zum Überwachen des Zustandes einer Schutzeinrichtung 2 einer Maschine 4, insbesondere des geschlossenen Zustandes einer Schutztür, mit der eine Raumtrenneinrichtung verschließbar ist, um beispielsweise das Bedienpersonal vor einer Gefährdung durch die im Betrieb befindliche Maschine 4 zu schützen. Die Schutzeinrichtung 2 weist ein erstes Teil 6 auf, beispielsweise einen feststehenden Rahmen. Das erste Teil 6 weist zwei Öffnungen 8, 10 auf, die jeweils durch ein zweites Teil 12, 14 schließbar ist, beispielsweise durch jeweils eine Schiebetür, die entsprechend den Doppelpfeilen 16, 18 gegenüber dem feststehenden ersten Teil 6 durch Lagerelemente 20 beweglich gelagert ist.

Die Vorrichtung 1 weist ein an dem feststehenden Teil 6 der Schutzeinrichtung 2 festgelegtes Schaltergehäuse 22 mit einem Schalterkopf 24 auf, der mit einem an dem zweiten Teil 12 der Schutzeinrichtung 2 festgelegten Betätiger 26 zusammenwirken kann, wenn der Betätiger 26 in einem das Schließen der Schutzeinrichtung 2 repräsentierenden Maß an den Schalterkopf 24 angenähert ist, insbesondere in den Schalterkopf 24 eingeführt ist. Außerdem weist die Vorrichtung 1 einen weiteren Schalterkopf 28 auf, der in entsprechender Weise mit einem an dem weiteren zweiten Teil 12 der Schutzeinrichtung 2 festgelegten Betätiger 30 zusammenwirken kann. Ein in dem Schaltergehäuse 22 angeordnetes Schaltelement schaltet nur dann, wenn beide zweiten Teile 12, 14 in ihrer geschlossenen Position sind und dementsprechend beide Betätiger 26, 30 mit dem jeweils zugeordneten Schalterkopf 24, 26 zusammenwirken.

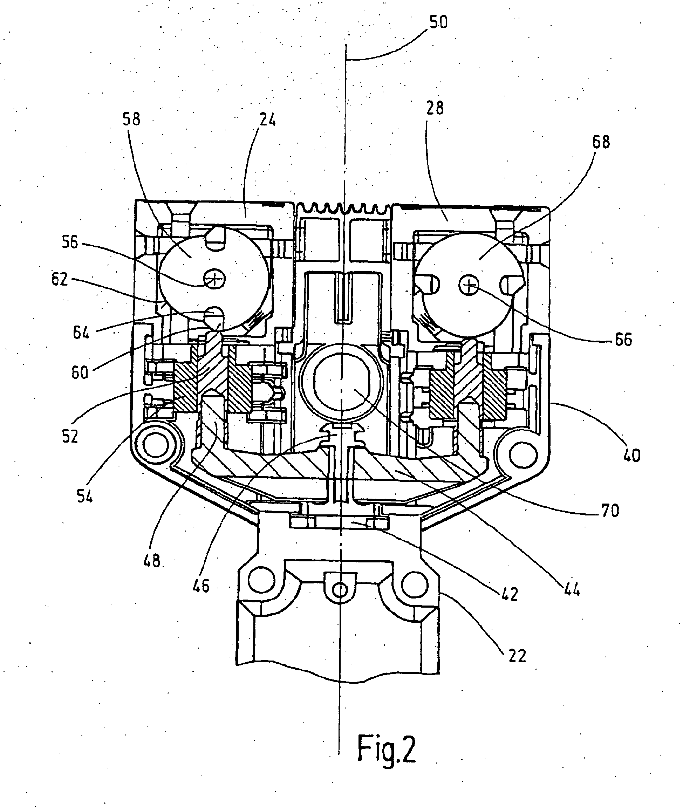

Die Fig. 2 zeigt teilweise in der Draufsicht, teilweise im Querschnitt ein erstes Ausführungsbeispiel der Anordnung des Schalterkopfes 24 und des weiteren Schalterkopfes 28. Die beiden Schalterköpfe 24, 28 sind an einer Kopfaufnahmeeinrichtung 40 angeordnet, die an einem axialen Ende des Schaltergehäuses 22 festgelegt ist, in dem das nicht dargestellte Schaltelement untergebracht ist. Der innere Aufbau des nur teilweise dargestellten Schaltergehäuses 22 entspricht beispielsweise dem in der eingangs genannten Druckschrift beschrieben Sicherheitsschalter der Anmelderin.

An seinem der Kopfaufnahmeeinrichtung 40 zugewandten Ende tritt ein Betätigungsstift 42 hervor, der entweder einstückig von dem Schalterbetätigungsstößel ausgebildet ist oder jedenfalls mit diesem bewegungsgekoppelt ist. Die in der Kopfaufnahmeeinrichtung 40 angeordnete Schalterbetätigungseinrichtung umfasst als Koppelelement 44 ein Gabelelement, das beispielsweise mittels einer Verbindungsschraube 46 lösbar mit dem Betätigungsstift 42 verbunden ist. Es wäre auch möglich, den Betätigungsstift 42 mit dem Koppelelement 44 einstückig auszubilden.

Das Koppelelement 44 bildet vorzugsweise einstückig zwei Gabelzinken 48 aus, von denen jeweils eine einem Schalterkopf 24, 28 zugeordnet ist. Die Kopfaufnahmeeinrichtung 40 ist im Wesentlichen symmetrisch zur Mittelebene 50 ausgebildet, weshalb nachfolgend vorrangig die Anordnung in der linken Bildhälfte der Fig. 2 betreffend den Schalterkopf 24 beschrieben wird. Die Gabelzinke 48 ist mit einem Betätigungsmittel 52 bewegungsgekoppelt verbunden, wobei das Betätigungsmittel 52 im Wesentlichen langgestreckt und insbesondere zylindrisch ausgebildet ist und mit seiner zylindrischen Außenfläche in einer Führungsbuchse 54 geführt ist. Es ist auch möglich, das Betätigungsmittel 52 einstückig mit dem Koppelelement 44 auszubilden.

Das Betätigungsmittel 52 bildet an seinem dem Schalterkopf 24 zugewandten Ende eine Anlagefläche 60 aus, insbesondere für die Anlage an einer Umfangsfläche 62 eines in dem Schalterkopf 24 um die rechtwinklig zur Zeichenebene der Fig. 2 verlaufende Drehachse 56 drehbaren Schaltrades 58. Das Schaltrad 58 weist mindestens eine Rastvertiefung 64 auf, in welche das Betätigungsmittel 52 eingreifen kann und dadurch das Schaltrad 58 hinsichtlich seiner Drehbewegung lösbar arretieren kann.

In der Darstellung der Fig. 2 ist in der linken Bildhälfte eine Position des Schaltrades 58 dargestellt, in welcher der zugehörige (nicht dargestellte) Betätiger in den Schalterkopf 24 eingeführt ist. Mithin befindet sich das Schaltrad 58 in einer Position, die dem geschlossenen Zustand jenes beweglichen Teils der Schutzeinrichtung 2 entspricht, dem der in den Schalterkopf 24 eingeführte Betätiger zugeordnet ist.

In dieser Position des Schaltrades 58 könnte das Betätigungsmittel 52 in die Rastvertiefung 64 eingreifen und dadurch den in den Schalterkopf 24 eingesteckten Betätiger arretieren und dadurch das zugehörige bewegliche Teil der Schutzeinrichtung im geschlossenen Zustand arretieren. Dies ist jedoch nicht der Fall, weil der in der rechten Bildhälfte dargestellte weitere Schalterkopf 28 nicht mit dem ihm zugeordneten Betätiger zusammenwirkt, insbesondere kein Betätiger in den weiteren Schalterkopf 28 eingeführt ist, und demgemäß das zugehörige bewegliche Teil der Schutzeinrichtung 2 nicht geschlossen ist. Dementsprechend ist auch das im Schaltergehäuse 22 angeordnete Schaltelement nicht betätigt und auch nicht betätigbar. Erst wenn auch der weitere Betätiger in den weiteren Schalterkopf 28 eingeführt ist, mithin auch das um die Drehachse 66 drehbare Schaltrad 68 um einen Winkel von etwa 90° gedreht ist, ist der Weg frei für ein Eintreten der Betätigungsmittel 52 in die zugehörigen Rastvertiefungen 64 der Schalträder 58, 68. Die Vorspannung für eine dahingehende Bewegung wird vorzugsweise über den Schalterbetätigungsstößel bzw. den Betätigungsstift 42 auf das Koppelelement 44 eingeleitet, beispielsweise infolge einer Federkraftbelastung oder einer elektromagnetischen Kraft.

Die Vorrichtung 1 weist eine von außerhalb betätigbare Verriegelungs-und/oder Entriegelungseinrichtung auf, die vorzugsweise im Bereich der Schalterbetätigungseinrichtung angeordnet ist, insbesondere im Bereich des Koppelelements 44. Hierzu weist das Gehäuse der Vorrichtung 1, insbesondere das Gehäuse der Kopfaufnahmeeinrichtung 40, eine Öffnung 70 auf, in welche beispielsweise ein vorzugsweise nur mit einem Werkzeug oder Schlüssel betätigbares Betätigungselement einsetzbar ist. Das Betätigungselement kann beispielsweise mit dem Koppelelement 44 derart bewegungsgekoppelt sein, dass - eine entsprechend geeignete Stellung der Schalträder 58, 68 vorausgesetzt - unabhängig von einer externen Energieversorgung die Positionen der Schalträder 58, 68 arretiert werden können durch Verschieben der Betätigungsmittel 52 bzw. des Gabelelements 44, wobei gleichzeitig das Schaltelement betätigt ist. Ebenso kann beispielsweise bei einem Ausfall der externen Energieversorgung über das Betätigungselement eine Entriegelung erfolgen, indem beispielsweise das Koppelelement 44 zurückgeschoben wird und dadurch das Betätigungsmittel 52 außer Eingriff mit der Rastvertiefung 64 kommt.

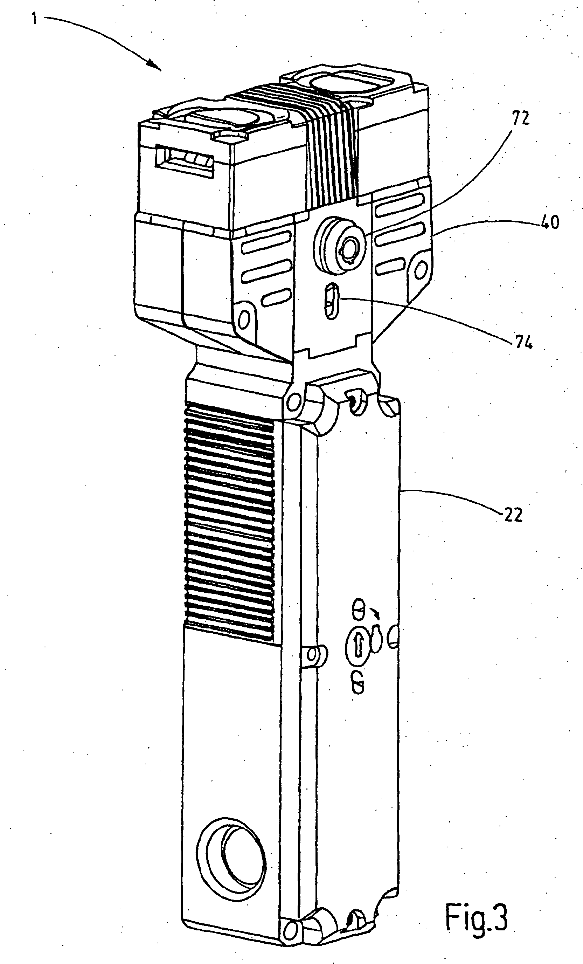

Die Fig. 3 zeigt eine perspektivische Gesamtansicht des ersten Ausführungsbeispiels der Vorrichtung 1 der Fig. 1. In die in der Fig. 2 dargestellte Öffnung 70 ist die Verriegelungs- und/oder Entriegelungseinrichtung 72 eingesetzt. Unterhalb davon und ebenfalls noch im Bereich der Schalterbetätigungseinrichtung, insbesondere des Koppelelements 44, weist das Gehäuseteil der Kopfaufnahmeeinrichtung 40 ein Sichtfenster 74 auf, das Teil einer Anzeigeeinrichtung ist, mittels welcher der Schaltzustand der Vorrichtung 1 von außen ablesbar ist. Hierzu kann beispielsweise auf dem Koppelelement 44 eine farbige Markierung angebracht sein, die je nach Position des Koppelelements 44 in dem Sichtfenster 74 sichtbar ist oder nicht.

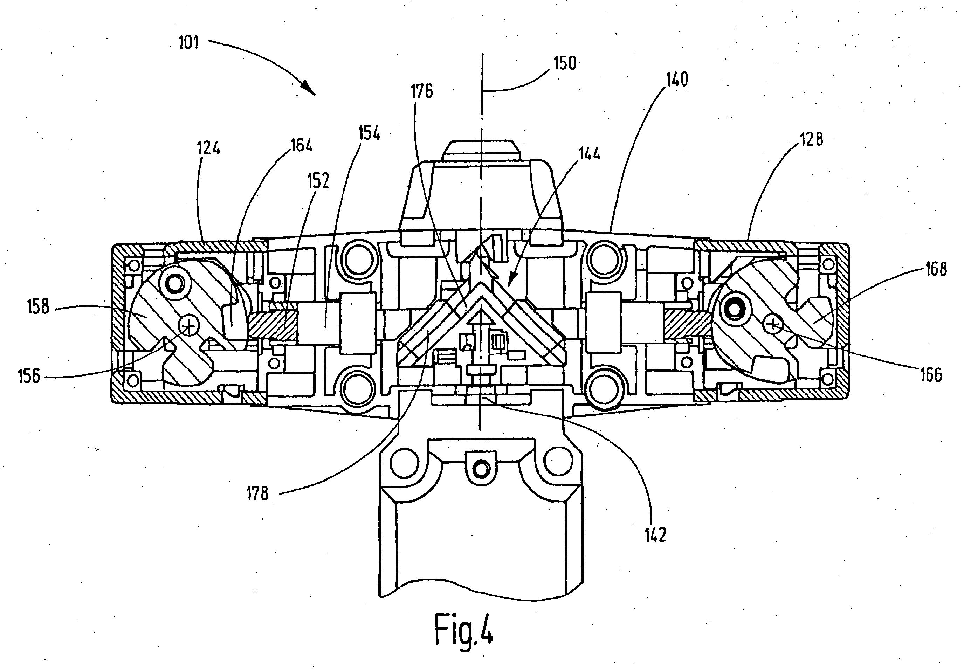

Die Fig. 4 zeigt eine Seitenansicht eines zweiten Ausführungsbeispiels der Vorrichtung 101, teilweise in der Ansicht und teilweise im Schnitt. Es sind wiederum zwei Schalterköpfe 124, 128 an einer Kopfaufnahmeeinrichtung 140 angeordnet, die im Wesentlichen spiegelsymmetrisch zu einer rechtwinklig zur Zeichenebene der Fig. 4 verlaufenden Symmetrieebene 150 aufgebaut ist. Grundsätzliche Übereinstimmung mit dem Ausführungsbeispiel der Fig. 2 besteht darin, dass die Schalträder 158, 168 um parallel zueinander verlaufende Drehachsen 156, 166 drehbar sind und dass die Schalterköpfe 124, 128 jeweils an mindestens zwei aneinander angrenzenden Außenflächen eine Einführöffnung für den jeweils zugehörigen Betätiger aufweisen, wenngleich im Unterschied zum ersten Ausführungsbeispiel der Fig. 2 diese Einführöffnungen zu unterschiedlichen Kanten des Schalterkopfes 124, 128 benachbart sind.

Ein wesentlicher Unterschied des zweiten Ausführungsbeispieles besteht darin, dass die Betätigungsmittel 152 koaxial zueinander angeordnet sind. Diesbezüglich bedarf es einer Umlenkung der Bewegungsrichtung des Betätigungsmittels 152 gegenüber der Bewegungsrichtung des Betätigungsstiftes 142. Hierzu ist ein Koppelelement 144 vorgesehen, welches die in der Darstellung der Fig. 4 vertikale Bewegungsrichtung des Betätigungsstiftes 142 in eine horizontale Bewegungsrichtung des Betätigungsmittels 152 umlenkt. Das Koppelelement 144 ist im Ausführungsbeispiel der Fig. 4 durch ein zweiseitiges Rampenelement 176 gebildet, das mit dem Betätigungsstift 142 bewegungsgekoppelt ist und mit diesem in der Darstellung der Fig. 4 in Vertikalrichtung bewegbar ist.

Auf den beiden einander gegenüberliegenden und einen Winkel von etwa 90° einschließenden Bewegungsrampen ist jeweils ein Winkelschieber 178 beweglich geführt, der mit dem Betätigungsmittel 152 bewegungsgekoppelt ist, das in der zugehörigen Führungsbuchse 154 gelagert ist. Bei einem Anheben des Rampenelements 176 werden die beiden Betätigungsmittel 152 auseinanderbewegt und greifen gegebenenfalls, sofern sich das Schaltrad 158, 168 in der entsprechenden Position befindet, d. h. der zugehörige Betätiger in den Schalterkopf 124, 128 eingeführt ist, in die Rastvertiefung 164 ein. Eine solche Position ist für das Schaltrad 158 in der linken Bildhälfte der Fig. 4 dargestellt, wohingegen in der rechten Bildhälfte der Fig. 4 das Schaltrad 168 sich in einer Position befindet, in welcher der zugehörige Betätiger nicht in den Schalterkopf 128 eingeführt ist. Bei einem Absenken des Rampenelements 176 gleiten die Winkelschieber 178 auf dem Rampenelement 176 nach oben und die Betätigungsmittel 152 bewegen sich aufeinander zu und geben die Schalträder 158, 168 für eine Drehbewegung frei.

## Patentansprüche

1. Vorrichtung (1; 101) zum Überwachen des Zustandes einer Schutzeinrichtung (2) einer Maschine (4), insbesondere Sicherheitsschalter zum Überwachen des geschlossenen Zustandes einer Schutztür oder dergleichen, wobei die Vorrichtung (1; 101) ein Schaltergehäuse (22) mit einem daran angeordneten Schalterkopf (24) und einen Betätiger (26) aufweist, der beim Zusammenwirken mit dem Schalterkopf (24) über eine Schalterbetätigungseinrichtung ein in dem Schaltergehäuse (22) angeordnetes Schaltelement betätigt und die Vorrichtung damit den Zustand der Schutzeinrichtung (2) signalisiert, und die Vorrichtung (1; 101) an dem Schaltergehäuse (22) mindestens einen weiteren Schalterkopf (28) für ein Zusammenwirken mit einem weiteren Betätiger (30) aufweist, **dadurch gekennzeichnet, dass** die Schalterbetätigungseinrichtung eine logische UND-Verknüpfung realisiert indem das Schaltelement nur dann betätigbar ist, wenn sowohl der Betätiger (26) mit dem Schalterkopf (24) zusammenwirkt als auch der weitere Betätiger (30) mit dem weiteren Schalterkopf (28) zusammenwirkt.

2. Vorrichtung (1; 101) nach Anspruch 1, **dadurch gekennzeichnet, dass** die Schalterbetätigungseinrichtung ein Koppelelement (44) aufweist, welches das Schaltelement mit dem Schalterkopf (24) und mit dem weiteren Schalterkopf (28) koppelt.

3. Vorrichtung (1; 101) nach Anspruch 2, **dadurch gekennzeichnet, dass** das Koppelelement (44) zwischen dem Schalterkopf (24), dem weiteren Schalterkopf (28) und dem Schaltelement beweglich gelagert, insbesondere linear beweglich gelagert, in der Vorrichtung (1; 101) angeordnet ist.

4. Vorrichtung (1; 101) nach einem der vorangehenden Ansprüche, **dadurch gekennzeichnet, dass** der Schalterkopf (24) und der weitere Schalterkopf (28) jeweils ein um eine Drehachse (56, 66) drehbar gelagertes Schaltrad (58, 68) aufweisen, an dem ein Betätigungsmittel (52) der Schalterbetätigungseinrichtung in Anlage gehalten ist.

5. Vorrichtung (1; 101) nach Anspruch 4, **dadurch gekennzeichnet, dass** die Drehachsen (56, 66) der Schalträder (58, 68) parallel zueinander ausgerichtet sind.

6. Vorrichtung (1; 101) nach Anspruch 4 oder 5, **dadurch gekennzeichnet, dass** die an dem jeweils zugeordneten Schaltrad (58, 68) anliegenden Betätigungsmittel (52) über ein Koppelelement (44) mit einem gemeinsamen Schalterbetätigungsstößel gekoppelt sind.

7. Vorrichtung (1; 101) nach Anspruch 6, **dadurch gekennzeichnet, dass** die an dem jeweils zugeordneten Schaltrad (58, 68) anliegenden Betätigungsmittel (52) parallel zueinander ausgerichtet sind.

8. Vorrichtung (1; 101) nach Anspruch 7, **dadurch gekennzeichnet, dass** die Schalterbetätigungseinrichtung als Koppelelement (44) ein Gabelelement aufweist, mit dem die an dem jeweils zugeordneten Schaltrad (58, 68) anliegenden Betätigungsmittel (52) mit dem gemeinsamen Schalterbetätigungsstößel gekoppelt sind.

9. Vorrichtung (1; 101) nach Anspruch 6, **dadurch gekennzeichnet, dass** die an dem jeweils zugeordneten Schaltrad (58, 68) anliegenden Betätigungsmittel (52) koaxial zueinander ausgerichtet sind.

10. Vorrichtung (1; 101) nach Anspruch 9, **dadurch gekennzeichnet, dass** die Schalterbetätigungseinrichtung als Koppelelement (44) ein Rampenelement (176) aufweist, mit dem die an dem jeweils zugeordneten Schaltrad (158, 168) anliegenden Betätigungsmittel (152) mit dem gemeinsamen Schalterbetätigungsstößel gekoppelt sind.

11. Vorrichtung (1; 101) nach einem der vorangehenden Ansprüche, **dadurch gekennzeichnet, dass** die Vorrichtung (1; 101) eine von außerhalb der Vorrichtung (1; 101) betätigbare Verriegelungs- und/oder Entriegelungseinrichtung (72) aufweist, mittels welcher ein verriegelter und/oder entriegelter Zustand der Vorrichtung (1; 101) lösbar arretierbar ist.

12. Vorrichtung (1; 101) nach Anspruch 11, **dadurch gekennzeichnet, dass** die Verriegelungs- und/oder Entriegelungseinrichtung (72) ein von außerhalb der Vorrichtung (1; 101) manuell oder mit einem Werkzeug oder Schlüssel zugängliches Betätigungselement aufweist, das mit der Schalterbetätigungseinrichtung gekoppelt ist.

13. Vorrichtung (1; 101) nach einem der vorangehenden Ansprüche, **dadurch gekennzeichnet, dass** die Vorrichtung (1; 101) eine Anzeigeeinrichtung aufweist, die den Schaltzustand der Vorrichtung (1; 101) anzeigt.

14. Vorrichtung (1; 101) nach Anspruch 12, **dadurch gekennzeichnet, dass** die Anzeigeeinrichtung ein Sichtfenster (74) aufweist, das im Bereich der Schalterbetätigungseinrichtung angeordnet ist.

## Claims

1. An apparatus (1; 101) for monitoring the state of a protection device (2) of a machine (4), in particular a safety switch for monitoring the closed state of a protection door or the like, the apparatus (1; 101) having a switch housing (22) with a switch head (24) located on the latter and an actuator (26) which, upon interacting with the switch head (24) actuates a switching element located in the switch housing (22) by means of a switch actuation device and the apparatus therefore signals the state of the protection device (2), and the apparatus (1; 101) has on the switch housing (22) at least one further switch head (28) for interaction with a further actuator (30), **characterised in that** that switch actuation device implements a logic AND connection by the switching element only being actuatable when both the actuator (26) interacts with the switch head (24) and the further actuator (30) interacts with the further switch head (28).

2. The apparatus (1; 101) according to Claim 1, **characterised in that** the switch actuation device has a coupling element (44) which couples the switching element to the switch head (24) and to the further switch head (28).

3. The apparatus (1; 101) according to Claim 2, **characterised in that** the coupling element (44) is arranged in the apparatus (1; 101) mounted moveably between the switch head (24), the further switch head (28) and the switching element, in particular mounted with linear movement.

4. The apparatus (1; 101) according to any of the preceding claims, **characterised in that** the switch head (24) and the further switch head (28) respectively have a switching wheel (58, 68) rotatably mounted about an axis of rotation (56, 66) resting against which an actuation means (52) of the switch actuation device is held.

5. The apparatus (1; 101) according to Claim 4, **characterised in that** the axes of rotation (56, 66) of the switching wheels (58, 68) are aligned parallel to one another.

6. The apparatus (1; 101) according to Claim 4 or 5, **characterised in that** the actuation means (52) adjacent to the respectively assigned switching wheel (58, 68) are coupled to a common switch actuating rod by a coupling element (44).

7. The apparatus (1; 101) according to Claim 6, **characterised in that** the actuation means (52) adjacent to the respectively assigned switching wheel (58, 68) are aligned parallel to one another.

8. The apparatus (1; 101) according to Claim 7, **characterised in that** the switch actuation device has as a coupling element (44) a fork element to which the actuation means (52) adjacent to the respectively assigned switching wheel (58, 68) are coupled to the common switch actuating rod.

9. The apparatus (1; 101) according to Claim 6, **characterised in that** the actuation means (52) adjacent to the respectively assigned switching wheel (58, 68) are aligned coaxially to one another.

10. The apparatus (1; 101) according to Claim 9, **characterised in that** the switch actuation device has as a coupling element (44) a ramp element (176) with which the actuation means (152) adjacent to the respectively assigned switching wheel (158, 168) are coupled to the common switch actuating rod.

11. The apparatus (1; 101) according to any of the preceding claims, **characterised in that** the apparatus (1; 101) has a blocking and/or unblocking device (72) that can be actuated from outside of the apparatus (1; 101), by means of which a blocked and/or unblocked state of the apparatus (1; 101) can be releaseably locked.

12. The apparatus (1; 101) according to Claim 11, **characterised in that** the blocking and/or unblocking device (72) has an actuation element accessible manually or with a tool or key from outside of the apparatus (1; 101) and that is coupled to the switch actuation device.

13. The apparatus (1; 101) according to any of the preceding claims, **characterised in that** the apparatus (1; 101) has a display device that displays the switching state of the apparatus (1; 101).

14. The apparatus (1; 101) according to Claim 12, **characterised in that** the display device has a viewing window (74) that is located in the region of the switch actuation device.

## Revendications

1. Dispositif (1; 101) de contrôle de l'état d'un dispositif (2) de protection d'une machine (4), notamment commutateur de sécurité pour le contrôle de l'état fermé d'une porte de protection ou analogue, dans lequel le dispositif (1; 101) a un boîtier (22) de commutateur ayant une tête (24) de commutateur qui y est montée et un actionneur (26) qui, en coopérant avec la tête (24) de commutateur, actionne, par un dispositif d'actionnement du commutateur, un élément de commutation disposé dans le boîtier (22) du commutateur et le dispositif signale ainsi l'état du dispositif (2) de protection et le dispositif (1; 101) a sur le boîtier (22) du commutateur au moins une autre tête (28) de commutateur destinée à coopérer avec un autre actionneur (30), **caractérisé en ce que** le dispositif d'actionnement du commutateur réalise une combinaison logique ET par le fait que l'élément de commutation ne peut être actionné que si à la fois l'actionneur (26) coopère avec la tête (24) de commutateur et l'autre actionneur (30) coopère avec l'autre tête (28) de commutateur.

2. Dispositif (1; 101) suivant la revendication 1, **caractérisé en ce que** le dispositif d'actionnement du commutateur a un élément (44) de couplage, qui couple l'élément de commutation à la tête (24) de commutateur et à l'autre tête (28) de commutateur.

3. Dispositif (1; 101) suivant la revendication 2, **caractérisé en ce que** l'élément (44) de couplage entre la tête (24) de commutateur, l'autre tête (28) de commutateur et l'élément de commutation est monté mobile, en étant monté notamment mobile linéairement dans le dispositif (1; 101).

4. Dispositif (1; 101) suivant l'une des revendications précédentes, **caractérisé en ce que** la tête (24) de commutateur et l'autre tête (28) de commutateur ont respectivement une roue (58, 68) de commutation montée tournante autour d'un axe (56, 66) de rotation, roue sur laquelle un moyen (52) d'actionnement du dispositif d'actionnement du commutateur est maintenu en application.

5. Dispositif (1; 101) suivant la revendication 4, **caractérisé en ce que** les axes (56, 66) de rotation des roues (58, 68) du commutateur sont parallèles.

6. Dispositif (1; 101) suivant la revendication 4 ou 5, **caractérisé en ce que** les moyens (52) d'actionnement s'appliquant à la roue (58, 68) de commutation associée respectivement sont couplés à un poussoir commun d'actionnement du commutateur par un élément (44) de couplage.

7. Dispositif (1; 101) suivant la revendication 6, **caractérisé en ce que** les moyens (52) d'actionnement s'appliquant à la roue (58, 68) de commutation respective associée sont parallèles.

8. Dispositif (1; 101) suivant la revendication 7, **caractérisé en ce que** le dispositif d'actionnement du commutateur a comme élément (44) de couplage un élément à fourche, par lequel les moyens (52) d'actionnement s'appliquant à la roue (58, 68) de commutation associée respectivement sont couplés au poussoir commun d'actionnement du commutateur.

9. Dispositif (1; 101) suivant la revendication 6, **caractérisé en ce que** les moyens (52) d'actionnement s'appliquant à la roue (58, 68) associée respectivement sont coaxiaux l'un par rapport à l'autre.

10. Dispositif (1; 101) suivant la revendication 9, **caractérisé en ce que** le dispositif d'actionnement du commutateur a comme élément (44) de couplage un élément (176) à rampe, par lequel les moyens (152) d'actionnement s'appliquant à la roue (158, 168) de commutation associée respectivement sont couplés au poussoir commun d'actionnement du commutateur.

11. Dispositif (1; 101) suivant l'une des revendications précédentes, **caractérisé en ce que** le dispositif (1; 101) a un dispositif (72) de verrouillage et/ou de déverrouillage, qui peut être actionné de l'extérieur du dispositif (1; 101) et au moyen duquel un état verrouillé et/ou déverrouillé du dispositif (1; 101) peut être bloqué d'une manière amovible.

12. Dispositif (1; 101) suivant la revendication 11, **caractérisé en ce que** le dispositif (72) de verrouillage et/ou de déverrouillage a un élément d'actionnement accessible manuellement par un outil ou une clé de l'extérieur du dispositif (1; 101), qui est couplé au dispositif d'actionnement du commutateur.

13. Dispositif (1; 101) suivant l'une des revendications précédentes, **caractérisé en ce que** le dispositif (1; 101) a un dispositif d'affichage, qui indique l'état de commutation du dispositif (1; 101).

14. Dispositif (1; 101) suivant la revendication 12, **caractérisé en ce que** le dispositif d'affichage a un hublot (74), qui est monté dans la zone du dispositif d'actionnement du commutateur.
